# EUROPEAN PATENT SPECIFICATION

(11) **EP 0 830 673 B1**
(45) Date of publication and mention of the grant of the patent: **02.11.2000**
(21) Application number: 96918039.7
(22) Date of filing: 03.06.1996
(51) Int. Cl.: G11B 5/54, G11B 17/028, G11B 33/02, G11B 25/04, G11B 17/04

(54) **ULTRA COMPACT COMPUTER MEDIA DRIVE**
ULTRAKOMPAKTER COMPUTERMEDIENANTRIEB
LECTEUR ULTRA-COMPACT DE SUPPORTS INFORMATIQUES

(30) Priority: 07.06.1995 US 484848
(43) Date of publication of application: 25.03.1998
(73) Proprietor: Pisano, Jerry A., Mission Viejo, CA 92691 (US); Nelson, Dennis, Mission Viejo, CA 92691 (US)
(72) Inventor: Pisano, Jerry A., Mission Viejo, CA 92691 (US); Nelson, Dennis, Mission Viejo, CA 92691 (US)
(74) Representative: Quinterno, Giuseppe
(86) International application number: US9608725
(87) International publication number: WO9641338

(56) References cited:
- JP-A- 1 003 888
- JP-A- 4 241 273
- US-A- 4 712 145
- US-A- 5 301 176
- US-A- 5 481 420
- PATENT ABSTRACTS OF JAPAN vol. 012, no. 046 (P-665), 12 February 1988 & JP 62 192992 A (MITSUBISHI ELECTRIC CORP), 24 August 1987,
- PATENT ABSTRACTS OF JAPAN vol. 012, no. 071 (P-673), 5 March 1988 & JP 62 209790 A (MITSUBISHI ELECTRIC CORP), 14 September 1987,
- PATENT ABSTRACTS OF JAPAN vol. 012, no. 354 (P-761), 22 September 1988 & JP 63 106980 A (MITSUBISHI ELECTRIC CORP), 12 May 1988,
- PATENT ABSTRACTS OF JAPAN vol. 096, no. 006, 28 June 1996 & JP 08 031147 A (TOSHIBA CORP;OTHERS: 01), 2 February 1996,

## Description

### FIELD OF THE INVENTION

This invention relates to computer peripheral devices for use with removable storage media, and more particularly to a drive and transducing system and method as defined in the preamble of Claim 1 and Claim 12, respectively.

### BACKGROUND OF THE INVENTION

In the personal computer field, especially in lap tops and other portables, but also in desk units, space and weight are often of significant importance. Over the years, computer peripheral makers have constantly reduced the size of storage media and the devices with which they are used. A good example is in removable storage media such as floppy or flexible disk drives, where the media were originally 8" in diameter, then reduced to 5-1/4", and subsequently reduced to 3-1/2", while the drives started as "full height" and then went to "half height" for a 5-1/4"' port. In desk top computers. 3-1/2" peripherals are often mounted on a 5-1/4" half height port. In lap tops, notebooks and other portable computers, available space is at a particular premium so that a different emphasis has been adopted, namely, approaching the objective of "just media size", in the drive unit. This means that the drive unit has the smallest feasible envelope around the full media. With the 3-1/2" floppy disk, the envelope is approximately 4" X 4" to 4" X 6", in depth and width, and the height (or thickness) is often 1/2" or less.

Since a lap top may only be 10" to 14" wide and 8" to 10" deep, however, it can be seen that a 4" X 4" to 4" X 6" envelope size demands use of a substantial internal volume within the lap top even if of low height. Reduction of this size requirement can be highly desirable, but a drastic reduction has not heretofore been achieved, except in terms of reducing profile height.

In modern recording systems, the tendency has been to try to secure higher capacity by increased record track density, increased recording density, or reduction of the overall size of the media as well as the drives with which they are used. However, media size is substantially invariant for a long time. once a standard size has been accepted by the industry and put widely into use. Thus software, documents and data are recorded and transferred on floppy disks now predominantly of the 3-1/2" standard, and no substantial changes are foreseen for the immediate future. Consequently, for the numerous data handling systems and devices on the market in which space is at a premium, a "smaller than media size" drive can be of great utility. As improvements in capability and reductions in size continue, this prospect will significantly increase.

Similar considerations apply to other removable storage media, such as CD-ROMs, Magneto-Optical (MO) and Bernoulli disks. Although different design factors exist, the volumetric improvement should be achievable in the same conceptual manner.

A drive and transducing system and method of the initially specified kind are known from JP-A-62192992. This prior document discloses a compact disc player comprising a base having an outer envelope smaller than the areal envelope of a compact disc. A disc drive is provided in the base in a fixed position, and a compact disc to be played is placed onto the base in an operative position in which the disc protrudes outwardly from the base. According to this prior solution, the envelope of the base is anyway larger than half the areal envelope of the compact disc.

It is an object of the invention to provide an improved drive and transducing system and method for disk media.

### SUMMARY OF THE INVENTION

The above-stated object is achieved according to the invention by the system defined in Claim 1 and the method defined in Claim 12.

Devices and methods in accordance with the present invention incorporate deployable driving and transducer units contained within a shallow drive system body or housing of a receiving dimension that is substantially less than one-half the media diameter. Only a part of the media is inserted in the housing, and to engage the media, the mechanisms are at least partially deployed or extended outwardly from the housing. The operative elements are then moved into engagement with the media and the drive and transduction functions are effected in conventional ways even though the principal part of the media protrudes outwardly. After use, the media is released and the mechanisms can be returned to the packed position.

For a floppy disk drive, for example, a compact deployable unit is disposed in a small volume that is wider than the width of an inserted floppy disk cartridge and thicker than the media in the transverse dimension relative to the plane of the media. In depth, however the unit is only sufficiently large to receive the distal edge portion of the floppy media, in an accommodating slot. A deployable drive mechanism comprises a pair of spaced apart arms on opposite sides of the media, pivotally mounted in the housing. The arms deploy outwardly and are then closed together, to engage a drive chuck against a hub on the media so as to rotate the media about its center. A transducer positioning mechanism is also mounted in the housing and is deployable outwardly to place one or two transducers in co-operative relation to the media. The transducer control mechanism includes a positioning mechanism that operates after deployment to shift the transducer radially relative to the media. When the cartridge is inserted into the guide slot, the transducers are placed in operative relation for recording and/or reproduction. After use of a given cartridge it may be released and ejected, and the chuck mechanisms and transducer positioning device unloaded from the media. Thereafter, a new media may be inserted or the deployable mechanisms collapsed back to the packed condition.

With a 3-1/2" floppy disk drive, for example, the deployable mechanism includes a pair of pivotal arms disposed to cooperate as a chucking mechanism, for engaging the drive hub on the floppy disk cartridge. One arm has a drive chuck end, while the other pivotal arm has a backup surface at its free end, providing a base surface against which the chucking mechanism can operate. The deployable transducer mechanism comprises a base link extendable outwardly from within the housing, and includes a drive mechanism for controlled movement along the length of the base link. Transducer support mechanisms extending from the drive mechanism extend toward the access windows on opposite sides of the disk media cartridge. A spring mechanism in the housing opens the slider window when the cartridge is inserted. After insertion, and the engagement of the transducers to opposite sides of the floppy disks, radial positioning is effected by a positioning motor movable along the base link. An ejection mechanism associated with the inserted end of the disk media incorporates a releasable spring mechanism, separating the deployable mechanisms from each other and forcing the disk media upwardly in the housing slot.

Write protect and density control functions may be selected by switches in the unit, by separate sensors which engage conventional windows along the protruding edge of the disk media, or by repositioning these windows on the disk media itself.

Methods in accordance with the invention enable an only partially inserted disk media to be used in data interchange relation, by spaced apart mechanisms for receiving the disk media in a recording/reproduction position, which mechanisms are first deployed in spaced apart relation, then engage the inserted media, and thereafter operate in conventional fashion.

The system may incorporate deployable housing segments which extend outwardly when the mechanism is deployed, to protect operative elements from accidental engagement. The unit may be oriented so that the disk media is inserted horizontally, vertically, or in some other juxtaposition. Additionally, the unit may be configured as a self-contained separate structure, attachable to an available connector at a convenient surface on the parent unit with which it is to be associated. Mechanisms for operating a CD-ROM, Magneto-Optical or Bernoulli disk or 5-1/4" floppy disk utilize like deployable drive and transducer mechanisms extendable from within a compact housing. Where appropriate, however, as with optical sensors, means may be provided to isolate the transduction area from dust and other contaminants.

### BRIEF DESCRIPTION OF THE DRAWINGS

A better understanding of the invention may be had by reference to the following description, taken in conjunction with the accompanying drawings, in which:
Fig. 1 is a combined perspective and exploded view, of an ultra compact disk media drive system in the packed state, with a disk cartridge in position for entry;
Fig. 2 is a perspective view of the drive system of Fig. 1 showing a deployable chuck and drive mechanism in extended position;
Fig. 3 is a side sectional view of the system of Figs. 1 and 2 showing the deployable chuck and drive mechanism and a deployable head positioning system in deployed position;
Fig. 4 is a side sectional view of the mechanism of Figs. 1 and 2, showing the deployable elements in packed position;
Fig. 5 is a side view corresponding to the view of Fig. 3, showing the deployable elements in unpacked position, in relation to a disk media;
Fig. 6 is a top view of the system of Fig. 1, showing the elements in undeployed position;
Fig. 7 is a fragmentary top view of the head positioning mechanism, in deployed position;
Fig. 8 is a side view of the mechanism of Fig. 7;
Fig. 9 is an end view of the mechanism of Fig. 7;
Fig. 10 is an end sectional view showing the deployable elements in deployed but not engaged position;
Fig. 11 is an end sectional view corresponding to Fig. 10 but with the deployable elements engaged to the cartridge; and
Fig. 12 is a perspective view of a deployable drive system for a CD-ROM.

### DETAILED DESCRIPTION OF THE INVENTION

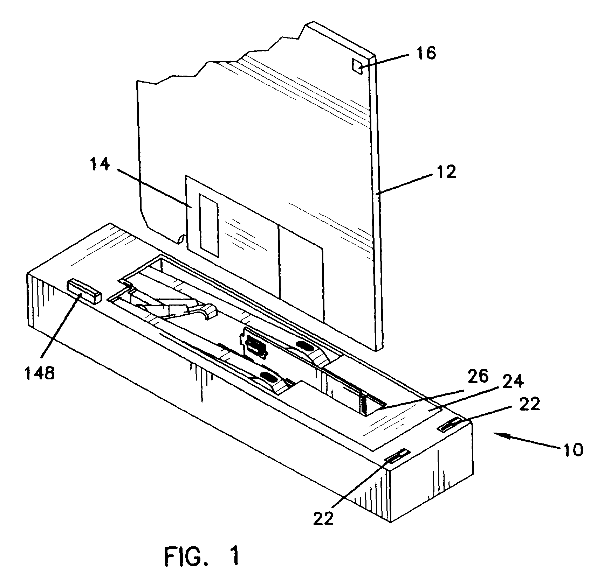

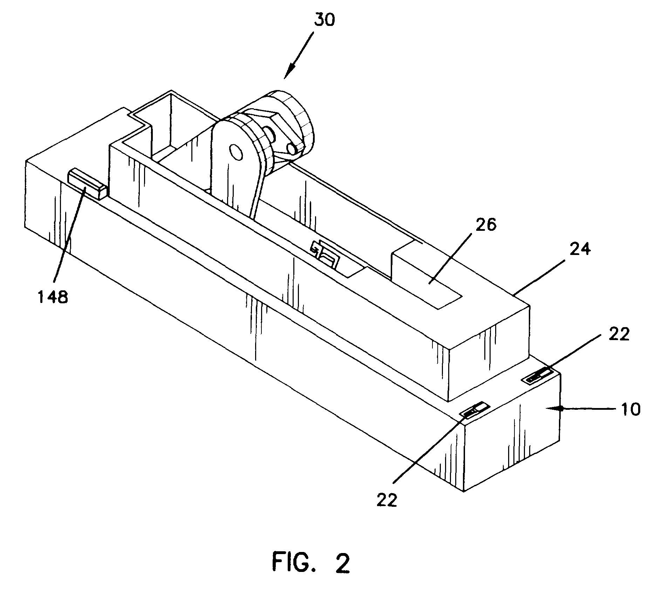

A system in accordance with the invention is depicted in Figs. 1-11 as employed for a floppy disk drive 10, as an example of a device for operating a removable media. Specifically referring to Figs. 1 and 2, the media comprises a 3-1/2 inch floppy disk cartridge 12 having a relatively rigid housing confining an interior magnetic disk which is driven at a central hub on what will be called the hub or back side of the disk. The inserted or distal edge of the cartridge 12 includes a slidable window 14 that covers rectangular openings in the cartridge 12, so that when the window 14 is shifted to operating position, access can be had to areas of the opposite sides of the disk for recording and reproduction operations. The proximal end of the floppy disk cartridge 12 includes small windows 16 which are occluded or not occluded in accordance with write protect and density functions. In the prior art type of floppy disk drive, a fully inserted cartridge 12 places these small windows 16 in juxtaposition to sensors, but in the present example, this portion of the cartridge 12 protrudes and the write protect and density selection functions are exercised differently. However, the small windows 16 can as readily be mounted at the inserted end of the cartridge 12, for sensing by means internal to the drive 10. Inasmuch as the details of floppy disk drives are well understood and the essentials of this configuration do not form part of the invention, no further discussion is provided.

As seen in the perspective view of Fig. 1, in which a cartridge 12 is shown as it is about to be inserted in a drive housing 20, the housing is a low profile rectangular unit of greater lateral dimension than the width of the cartridge 12. Although the housing 20 will often be mounted in or on the side of the computer unit to which it is to be attached, it is to be recognized that the mounting can be relatively arbitrary. The housing 20 can be mounted in a port in the computer housing, or attached to the exterior, or disposed in another orientation. For convenience, the housing 20 is depicted as disposed in an upstanding orientation, and the terms "top", "front", "rear", "side" and "bottom" are used for descriptive purposes only relative to that orientation shown. Since the dimensions, in plan, of the 3-1/2 inch floppy are about 3-1/2 inches by 3-5/8 inches, and the cartridge is approximately 1/8 inch thick, housings in accordance with the invention can be of the order of 3/4 inches high by 5 inches long by 1-1/2 inches wide, in the compacted form. Consequently, provision can usually be made for incorporation of the unit in a small processor, whether it is to be embedded in the side or top of a lap top or notebook computer. Alternatively, with a surface mount, bayonet connectors (not shown) on the housing need only be fitted into suitable receptacles for connection of power and data transfer lines. Such arrangements enable a removable disk media capability to be added to a system without substantially affecting unit size. This does not preclude the option of packaging the electronics inside the drive as is done in the current state of the art.

The housing 20 is exterior to an internal pop-out or extendable housing 24 that has a limited upward travel and is deployed when a disk cartridge is inserted through a central lengthwise slot 26, as shown in somewhat simplified form in Fig. 2. Write protect and density switches 22 are provided at one side of the housing 20 for selection of write protect and density options. Alternatively, the write protect and density windows 16 on the disk cartridge 12 can be repositioned adjacent the leading (inserted) end and sensed by known mechanisms, or deployable sensors may be extended from the housing for this purpose.

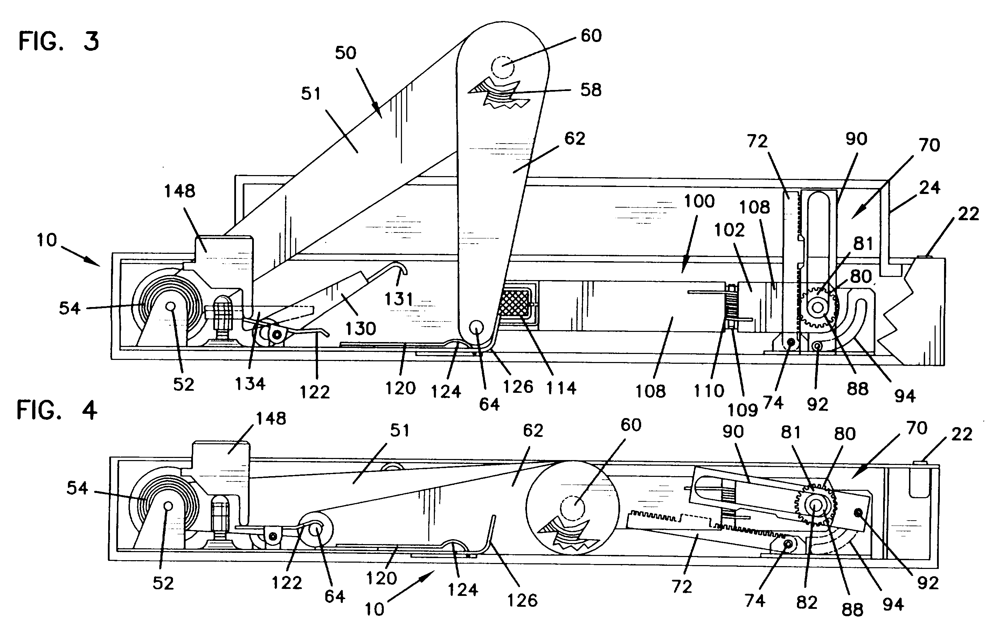

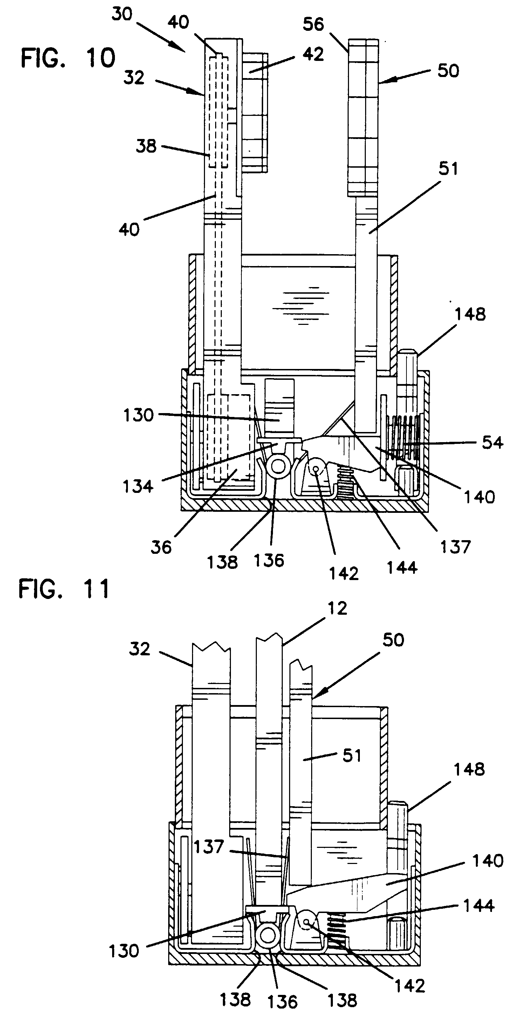

As seen in Figs. 3 to 6 particularly the deployable chuck and drive mechanism 30 comprises primarily a pair of spaced apart pivoted arms mechanically biased toward a deployed position but controlled by a toggle-type mechanism to have a collapse function. The first pivoted arm 32 includes a chuck mechanism disposed on the "hub" or back side of an inserted floppy disk, as seen in Figs. 10 and 11. The arm 32 is mounted to pivot within an arc about a base pivot shaft 34 disposed adjacent one longitudinal end of the housing 20. A motor 36 mounted at the base pivot drives a pulley 38 at the free or elbow end of the arm 32 via an interior belt 40 inside the arm 32. A drive chuck 42 at the free end is rotated by the pulley 38 and faces the hub of the cartridge to rotate the disk within.

Although a base mounted motor and belt drive have been shown by way of example, it will be apparent that other configurations may be used as well for the drive chuck, including a direct coupled motor.

The second deployable device 50 is disposed on the opposite side from the floppy disk hub, or on what may be called the front side of the disk. A longer first arm 51 is mounted to pivot about, and is slidable along, a base pivot shaft 52 that is collinear with and coupled to the base pivot shaft 34 at the opposite side, so that the arms 32. 51 move together. A helical clamping spring 54 around the shaft 52 urges the device 50 toward engagement with an inserted cartridge, but is restrained until such time as the cartridge is fully inserted so that there is adequate clearance for the sides of the cartridge. A clamp pad 56 at the elbow end of the first arm 51 is disposed opposite the drive chuck 42 when the mechanism is in the operative position, providing needed support for engagement and rotation of the hub on the floppy disk by the drive chuck 42. In the elbow region, an internal torsion spring 58 around an elbow pin 60 biases a control arm or strut 62 in the direction toward deployment, but its action is controlled by toggle action and limit catches as described below. For this purpose, a bar 64 extends outwardly, transverse to the plane of the inserted floppy disk. at the lower end of the control arm 62. It will be evident that the arms 32, 51 could be separately deployable and packable by using individual biasing springs and toggle devices.

Referring to Figs. 3-5 and 7-9, a deployable head positioning mechanism 70 is mounted to extend from the opposite end of the housing 20 from the deployable chuck and drive mechanism 30. An extendable rack pivots about a rack pivot arm 74 adjacent the bottom of the housing 20, up to a vertical position relative to the housing 20. A drive pinion 80 moves along the rack 72 to control the radial position of the magnetic heads relative to the disk, as described below. For compactness, the rack pinion 80 forms the exterior of a wound rotor 81, about a non-rotating shaft stator 82. It will occur to those skilled in the art that the drive may alternatively employ a compact motor positioned at to one side of a one-piece pinion, or a split rack with separate pinions on opposite sides of a central motor, or a base mounted motor with a band drive. End members 84, 85 at each side are coupled to the shaft 82 and are similarly non-rotatable, providing supports for the base of a dual-sided magnetic head assembly as described hereafter. At each end of the shaft 82, follower hubs 88 rest in and move between guide rails 90 for the pinion 80. The guide rails 90 are deployable from a packed position within the housing 20, to an extended position parallel to the desired radial displacement of magnetic transducers relative to the disk. For this purpose, a pivot pin 92 follows a circular track defined by a slot 94 in a guide member, the movement of which is constrained to be substantially parallel to the rack 72.

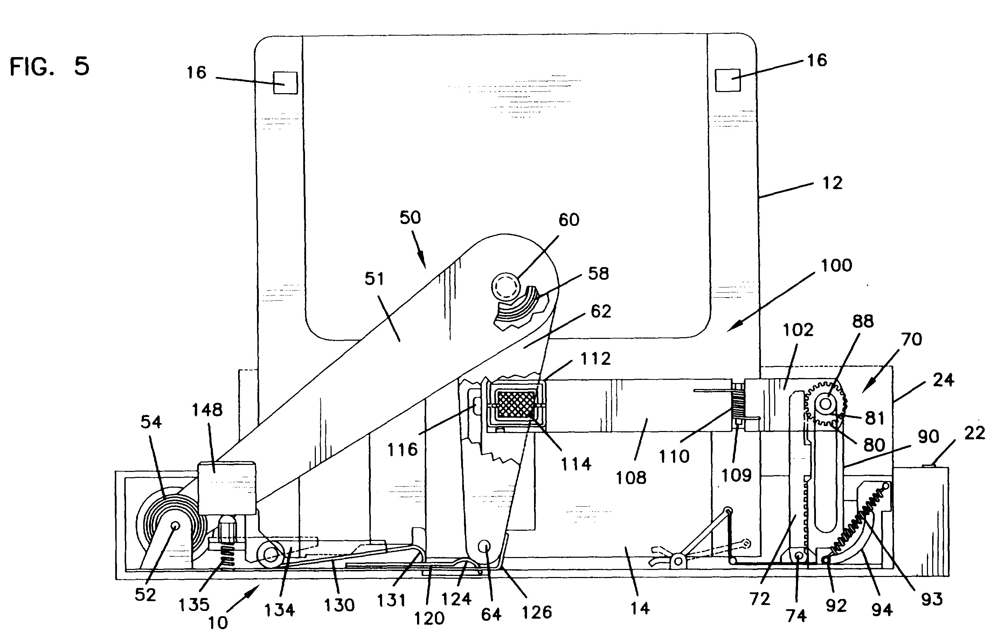

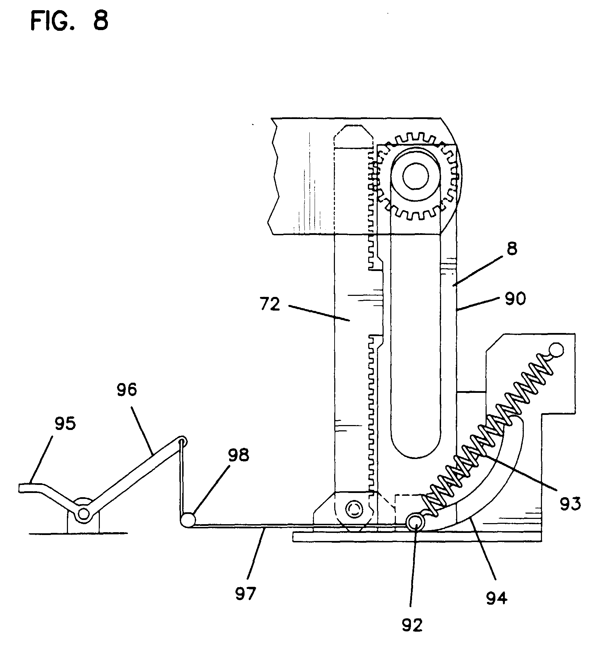

Referring to Figs. 5 and 8, the pin 92 is biased toward the upper end of the slot 94 by a tension spring 93, shown in Figs. 5 and 8 in the extended position, with the guide rails 90 extended and a cartridge 12 inserted. When the cartridge 12 is inserted, a sensor finger 95 in its path is engaged by the distal edge, raising a lever arm 96, the end of which is coupled by a flexible wire 97 to the pin 92, the wire 97 turning around a small roller 98. Upward movement of the end of the lever arm 96 to the position shown, from the dotted line position, pulls the pin 92 down, to the position shown, and extends the guide rails 90. The rack 72 is coupled to the guide rails 90 by springs (not shown) so that they move together between packed and deployed positions.

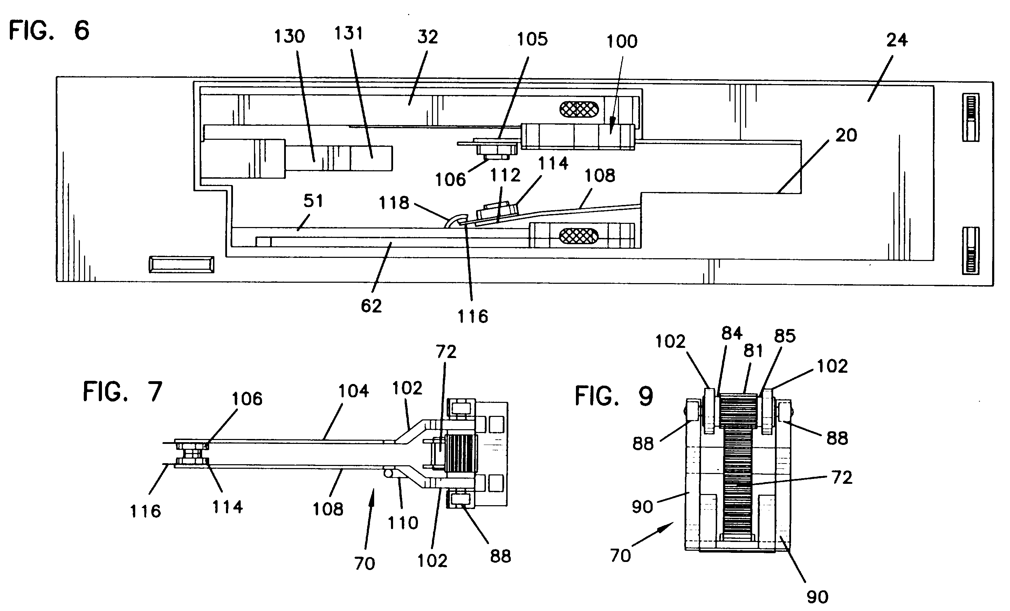

The dual sided magnetic head assembly 100 extends from bases 102 fixedly coupled to the end members 84, 85 on the head positioning mechanism 70. The bases 102 extend perpendicularly to the radial track to be followed on the disk, and on the hub side a support arm 104 holds a gimbal mount 105 (Fig. 6) (which may be omitted or replaced by a higher compliance spring, according to one of the known expedients) for the magnetic transducer 106. On the front side the support arm 108 is movable about a connecting pin 109 toward and away from the disk, but biased toward the disk (the "loading" direction) by a torsion spring 110. The other end of the support arm is coupled to a gimbal mechanism 112 for the magnetic transducer 114 on the front side. A loading tab 116 at the end of the gimbal mechanism 112 is positioned to be engaged by a finger 118 on the control arm 62, moving the transducer 114 to the unloaded position when the mechanisms are in the packed position.

Control of the position of the deployable drive devices 30, 50 is governed by cooperation of the transverse bar 64 with a detent strip 120 disposed along the base of the housing 20. At one end the strip 120 is curved to define a packing limit catch 122. In the intermediate region a raised curvature 124 provides a detent or toggle action with the spring force acting on the device 50. When the transverse bar 64 is at its deployment limit, it rests in a deployment limit catch 126, but can be forced manually toward the packed position, because the elbow is over center relative to the transverse bar 64, by a downward force at the top of the elbow. The control arm moves under manual pressure against the bias of the torsion spring 58, until the transverse bar 64 passes over the curvature 124, and reaches the fully compacted or latched position with the bar 64 in the packing limit catch 122.

A spring arm 130 having a hook end 131 is disposed lengthwise along the housing and normally positioned at an upward angle, along the plane of the slot 26 in the housing 20. When a cartridge 12 is inserted, the notch in its edge (seen in Fig. 1) adjacent the slider 14 that covers the recording area at the leading edge is engaged by the hook end 131 and shifted to expose the recording areas on each side to the magnetic transducers.

The deployment control mechanism 132 operates off a snubber bar 134 which lies above the base of the housing 20 in line with the slot 26. The snubber bar 134 moves between vertical limits on a spring mount 135 having sufficient force to eject an inserted cartridge. A wishbone spring 136 having upstanding end elements 137 is mounted below the upper edge of the snubber bar 134, to move within side channels 138. When the snubber bar 134 is up, the end elements 137 exert spreading force laterally on the control arm 62, holding it away from the zone of the insertion slot and any inserted cartridge. The control arm 62 also unloads the movable transducer support arm 108 on the front side by engagement of the unloading tab 116. When the snubber bar 134 is in the down position, the channel 138 brings together the end elements 137 of the wishbone spring 136, allowing the helical clamping spring 54 to move the clamp pad 56 into its support position against an inserted disk.

When the snubber bar 134 is moved down by disk insertion and latching force, it is latched by a rocker-type locking latch 140 that turns about a pivot 142 and is held in place by a latch spring 144. A disk eject button 148 at the side of the housing 20 is pressed downwardly by the operator to overcome the latch spring 144 and allow the snubber bar 134 to move up, forcing the clamping mechanism to unload before freeing and moving up the disk.

The extendable portion 24 of the housing 20 is spring biased with a light force toward the closed or down position, but moves upwardly when the head positioning mechanism 70 is moved up to deployed position. When the deployable rack 72 and the guide rails 90 are returned to the packed position, the extendable housing 24 portion closes to its compact position. This protection may not be needed in a variety of circumstances. Alternatively however, a hinged cover (not shown) may be used to cover the slot.

It will be appreciated, therefore, that the compact external form factor seen in the view of Fig. 1 contains a fully functional disk drive assembly which provides recording and reproduction functions in conventional fashion, after deployment and which can be returned to the packed configuration as desired. Although depicted in conjunction with a 3-1/2" floppy disk the general approach is suitable for 5-1/4" floppies, floppies smaller than 3-1/2" and other forms of rotatable disk media.

Starting with the undeployed or packed configuration, as in Fig. 1, the user deploys the chuck and drive mechanism, 30, comprising the two arms 32, 51, and the head positioning mechanism 70. This can be done automatically by inserting the cartridge 12 in the slot 26 in the housing 20, engaging the internal snubber bar 134. The insertion of the cartridge 12 also engages an end of the packing latch 122, causing it to release the transverse bar 64 on the end of the control arm 62, allowing it to move toward the deployment limit catch 126, aided by the torsion spring 58 at the elbow. Alternatively, the eject button 148 can be pressed to release the packing latch 122. Both arms 32 and 51 deploy together, and the release of the pressure of the wishbone spring 136 end elements 137 against the control arm 62 allows the helical clamping spring 54 to urge the clamp pad 56 against the front face of the cartridge 12. The drive chuck 42 in turn thus engages the hub on the back side of the cartridge 12 and the motor drives the internal disk through the hub on the cartridge 12.

Concurrently, the deployable head positioning mechanism 70 is pivoted upwardly, about the rack pivot pin 74, with the adjacent guide rails 90 moving in tandem to a limit position defined by the end of the circular guide slot 94. In the packed position the magnetic head assembly 100 is at the base of the positioning mechanism 80 (at the outer disk radius) so that it moves only through a small arc, with the support arms 104, 108 being lengthwise to the housing 20, where they remain during operation. The extendable housing 24 moves out with the rack and guide rail mechanisms to protect the head assembly.

Concurrently also, as the cartridge 12 is inserted, its leading edge contacts the spring arm 130, forcing it through an arc as the hook end 131 opens the slider window 14 on the cartridge 12. With the recording areas exposed on both sides of the cartridge 12, closure movement of the front control arm 62 allows the unloading tab 116 on the head assembly 100 to move in with the holding finger 118 on the control arm 62, initiating head-to-disk contact on both sides of the disk. The snubber bar 134 is held securely down by the locking latch 140 and associated spring 144, and since the cartridge 12 is clamped, and the drive motor 36 is turning the drive chuck 42, and disk data transfer operations can begin.

In operation, with the disk running constantly, conventional circuits for commanding track location energize the internal motor in the drive pinion 80, moving the drive pinion 80 and the associated head assembly 100 to selected radial track positions. When use of the particular cartridge has been completed, the head assembly 100 is parked at the outside radial position and the disk eject button 148 may be pressed to release and eject the cartridge 12.

Pressing the disk eject button 148 overcomes the locking latch spring 144 force. allowing the locking latch 140 to release the snubber bar 134, and initiating the separation of the front dual link device 50 from the cartridge 12, as the wishbone spring 136 end elements 137 overcome the helical clamping spring 54. As this takes place, the front magnetic transducer 114 is unloaded from the disk as the control arm 62 and finger 118 acting on the unloading tab 116 move outwardly. The cartridge 12 is then free to rise and be extracted. The internal spring in the cartridge 12 which biases the slider loses contact with the slider window 14 on the cartridge 12, so that the window 14 close and the recording areas are again covered.

The extended drive mechanism 30 and head positioning mechanism 70 may then be returned to the packed position unless it is desired to insert a new cartridge 12. The top surfaces at the ends of the arms 32, 51 can be pressed down, overcoming the detent action of the deployment limit catch 126 and forcing the transverse bar 64 over the toggle curvature 124 to complete the closure action. The release of the cartridge 12 also draws the rack 72 and guide rail 90 structures down about their base pivots 74, 92 until the closed, compact positions are reached.

It will be appreciated that a number of different mechanisms can be employed in different parts of the system to achieve like results. Different deployment structures can be used, such as single arms movable through an arc manually or by small torque motors. The deployment control devices can vary substantially as long as the essential functions are established. No expandable housing need be used, under many circumstances, or alternatively one may expand to a substantially larger outline.

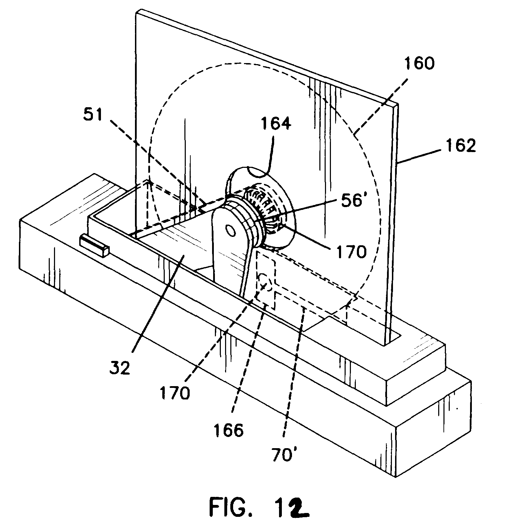

The view of Fig. 12 depicts a CD-ROM drive in accordance with the invention, in which the compact disk 160 is disposed within a rectangular housing 162 having a central aperture 164 in both sides and a transparent radial window 166 on one broad face. The unit includes pivot arms 32, 51 and a rotatable clamping pad 56' on the front side, but the disk 160 is engaged at its central bore by a centering hub 170 that positions as well as grips the disk 160. The deployment and packing operations are the same as previously described. The sensor system 175 for reading the compact disk 160 is shown only generally, and is understood to include a laser illuminator and an adjacent sensor device which senses laser light reflected off the selected disk track. The deployable head positioning mechanism 70' may be constructed and operated as in the example of Figs. 1-11. but senses only one side of the compact disk 160.

In operation, a compact disk 160 in a rectangular housing 162 is entered into the receiving slot in the housing 20, initiating the deployment actions. The disk 160 is driven via the arm 32, held in place by the rotatable clamping pad 56'. The sensor system 175 is translated radially along the window 166 as the recorded patterns are read. The CD-ROM capability can thereby be added to a system in a wide variety of configurations.

Although there have been described above and illustrated in the drawings various forms and modifications in accordance with the invention, it will be appreciated that the invention is not limited thereto but encompasses all modifications and examples within the scope of the appended claims.

## Claims

1. A drive and transducing system for a removable disk media, comprising a base (10) which has an outer envelope smaller than the areal envelope of the media (12; 160) to be operated and in which there are provided drive means (30) engageable to means (36) for rotating the disk media (12; 160) and transducer means (100) engageable to means (72, 80) for controlling the transducer means location relative to the disk media (12; 160) during operation;
characterised in that
the drive means (30) is movable between a packed position within the base (10) and a deployed position at least partially outside the base (10) in engagement with an installed media (12; 160), and in that
the transducer means (100) is movable between a packed position at least partially within the base (10) and a deployed operative position in scanning relationship to the media (12; 160).

2. A drive and transducing system according to Claim 1, wherein the drive (30) and transducer means (100) are adjacent and along a common first plane in the packed position, and lie at least partially transverse to a common second plane substantially perpendicular to the first plane and outside the base (10) when deployed.

3. A drive and transducing system according to Claim 1 or 2, wherein
the base (10) extends along a predetermined length and has a thickness greater than the media (12; 160) and a depth less than the media;
the media drive means (30) being mounted adjacent one end of the length of the base (10) and extendable from within the base (10) along a given plane substantially perpendicular to the base length;
the transducer means (100) being mounted adjacent the other end of the length of the base (10) and extendable from within the base (10) along the given plane; and
means coupled to the base for receiving a rotatable media (12; 160) in operative position along the given plane, the media (12; 160) in operative position protruding from the base (10) past the extended drive means (30) and transducer means (100) and being engaged thereto when in operative relation.

4. A drive and transducing system according to one of the preceding Claims, wherein said drive means (30) includes terminal means for engagement to a central region of the media (12; 160) for rotation thereof.

5. A drive and transducing system according to one of the preceding claims, wherein the base (10) includes means for receiving a portion of the media (12; 160), and wherein the base (10) has an areal outline occupying less than half of the area of the media (12; 160), such that the media (12; 160) protrudes from the base (10) when installed.

6. A drive and transducing system according to one of the preceding Claims, wherein the media comprises a floppy disk device (12) and wherein the drive means (30) comprises oppositely disposed members (42, 56) for engaging a central region of the floppy disk device (12) to rotate the media therein.

7. A drive and transducing system according to Claim 6, wherein the transducer means comprises magnetic transducer means (106, 114) and the transducer means further comprises means (72, 80) for shifting the magnetic transducer means (106, 114) to different radial tracks relative to the media (12) when the transducer means is deployed.

8. A drive and transducing system according to one of Claims 1-5, wherein the media comprises a compact disc (160) and means are provided for engaging a compact disc (160) from opposite sides on the central region thereof, and wherein the transducer means comprises beam sensing means (70') traversing an operative region of the compact disc (160).

9. A drive and transducing system according to one of Claims 1-5, wherein the media comprises a Bernoulli disk.

10. A drive and transducing system according to one of Claims 1-5, wherein the media comprises a floppy disk (12), including:
a housing (10) having a length greater than the floppy disk (12) with which it is to operate and a height which is less than one-third of the transverse dimension of the floppy disk (12), the housing (10) including means defining a lengthwise slot (26) for receiving an inserted floppy disk (12);
a deployable disk drive mechanism (30) comprising a pair of arms (32, 51) mounted pivotally adjacent and within one end of the housing (10) and spaced apart from each other, a control arm (62) coupled to the base and the free end of the second arm (51), the end of the control arm (62) being reciprocal along the housing (10) to fold the first and second arms to a packed position substantially within the housing (10), the disk drive mechanism (30) further comprising:
chuck means (42) coupled to a first (32) of the arms to pivot at the free end of the first arm (32), for engaging the center region of the floppy disk (12);
disk support means (56) coupled to a second (51) of the arms, the arms (32, 51) being positioned to receive a floppy disk (12) between them that is inserted at the slot (26);
torsion spring means (58) coupled to the deployable disk drive mechanism (30) to bias the disk drive mechanism (30) toward an extended position;
means coupled to the disk drive mechanism (30) to move at least one arm perpendicularly to the plane of an inserted floppy disk (12) in response to insertion of the floppy disk (12), to urge the floppy disk (12) against the chuck means (42) for rotation;
drive means (36, 38, 40) coupled to the chuck means (42) for rotating the floppy disk (12);
a deployable head positioning mechanism (70) mounted in the opposite end of the housing (10) from the disk drive mechanism (30), the head positioning mechanism (70) including a rack (72) pivotally mounted in the housing (10) and movable between a packed position within the housing (10) and an extended position perpendicular thereto; pinion means (80) in engagement with the rack (72) and movable therealong; and motor means coupled to the pinion means (80) for controlling the position of the pinion means (80);
magnetic head assembly means (100) coupled to and movable with the pinion (80), the head assembly means (100) comprising a pair of arms (104, 108) disposed on opposite sides of the floppy disk (12) and including magnetic transducer means (106, 114) mounted on the ends of the arms (104, 108), and means (116) responsive to movement of the control arm (62) for controlling the loading and unloading position of one (114) of the magnetic transducer means (106, 114);
limit position control means (122, 124, 126) disposed within the housing (10) engaging the base end of the control arm (62) to control the limit positions thereof, the limit control means including means (124) between the limit position providing a detent mechanism for the arms (32, 51, 62) of the disk drive mechanism (30);
deployment control means (132) disposed in the housing (10) in the path of an inserted floppy disk (12) and including a spring mechanism (134, 137) that compresses upon insertion of said disk (12) and latch means (140) to retain the spring mechanism (134, 137) in compressed position, the spring mechanism (134, 137) being coupled to release the disk drive mechanism (30), engage the floppy disk (12) and release the deployable head positioning mechanism (70), and to release the loading means; and
means for collapsing the disk drive mechanism (30) and head positioning mechanism (70) to packed position, and engageable to delatch the latch means (140).

11. A system according to Claim 10, wherein
the drive means (36, 38, 40) coupled to the chuck means (42) includes drive motor means (36) mounted in the base of the first arm (32), pulley means (38) coupled to the chuck means (42), and belt means (40) for rotating the pulley means (38) from the motor means (36); and
wherein the deployable disk drive mechanism (30) includes torsion means (54) coupled to the second arm (51) and control arm (62) for biasing the second arm (51) and control arm (62) toward the deployed position.

12. A method of using a rotatable data storage media (12; 160) employing a drive device (30) and transducer mechanism (100) normally positioned within a housing volume (10) comprising the steps of
receiving the media (12; 160) in a protruding position relative to the housing volume (10);
rotating the media (12; 160) while in the protruding position; and
controlling the operative position of the transducer mechanism (100) relative to the media (12; 160) to effect data transfer with the media (12; 160) in the protruding position;
characterised by deploying the drive device (30) outside the housing volume (10) to grip a control region of the media (12; 160); and deploying the transducer mechanism (100) into operative relation to the media (12; 160) in the protruding position, before effecting said data transfer.

## Patentansprüche

1. Antriebs- und Wandlungssystem für ein entnehmbares Plattenmedium, mit einer Basis (10), die eine Außenhülle besitzt, die kleiner ist als die Flächenhülle des Mediums (12; 160), das betrieben werden soll, und in der eine Antriebseinrichtung (30) vorgesehen ist, die mit einer Einrichtung (36) zum Drehen des Plattenmediums (12; 160) in Eingriff gebracht werden kann, sowie mit einer Wandlereinrichtung (100), die mit einer Einrichtung (72, 80) zum Steuern des Wandlereinrichtungsortes relativ zum Plattenmedium (12; 160) während des Betriebs in Eingriff gebracht werden kann;
dadurch gekennzeichnet, daß
die Antriebseinrichtung (30) zwischen einer platzsparenden Position innerhalb der Basis (10) und einer entfalteten Position wenigstens teilweise außerhalb der Basis (10) in Eingriff mit einem installierten Medium (12; 160) bewegt werden kann, und
die Wandlereinrichtung (100) zwischen einer platzsparenden Position wenigstens teilweise innerhalb der Basis (10) und einer entfalteten Betriebsposition in Abtastbeziehung zum Medium (12; 160) bewegt werden kann.

2. Antriebs- und Wandlungssystem nach Anspruch 1, bei dem der Antrieb (30) und die Wandlereinrichtung (100) in der platzsparenden Position benachbart sind und entlang einer gemeinsamen ersten Ebene liegen und dann, wenn sie entfaltet sind, wenigstens teilweise quer zu einer gemeinsamen zweiten Ebene, die im wesentlichen senkrecht zur ersten Ebene liegt, und außerhalb der Basis (10) liegen.

3. Antriebs- und Wandlungssystem nach Anspruch 1 oder 2, bei dem
die Basis (10) sich über eine vorgegebene Länge erstreckt und eine größere Dicke als das Medium (12; 160) und eine kleinere Tiefe als das Medium aufweist;
die Medienantriebseinrichtung (30) neben einem Ende der Länge der Basis (10) montiert ist und von innerhalb der Basis (10) entlang einer gegebenen Ebene, die im wesentlichen senkrecht zur Basislänge verläuft, ausgefahren werden kann;
die Wandlereinrichtung (100) neben dem anderen Ende der Länge der Basis (10) montiert ist und von innerhalb der Basis (10) entlang der gegebenen Ebene ausgefahren werden kann; und
eine Einrichtung vorgesehen ist, die mit der Basis verbunden ist, um ein drehbares Medium (12; 160) in einer Betriebsposition entlang der gegebenen Ebene aufzunehmen, wobei das Medium (12; 160) in der Betriebsposition aus der Basis (10) über die ausgefahrene Antriebseinrichtung (30) und die Wandlereinrichtung (100) hinausragt und mit dieser in Eingriff ist, wenn sich diese im Betriebszustand befinden.

4. Antriebs- und Wandlungssystem nach einem der vorangehenden Ansprüche, bei dem die Antriebseinrichtung (30) eine Endeinrichtung enthält für den Eingriff mit einem Zentralbereich des Mediums (12; 160), um dieses zu drehen.

5. Antriebs- und Wandlungssystem nach einem der vorangehenden Ansprüche, bei dem die Basis (10) eine Einrichtung enthält zum Aufnehmen eines Abschnitts des Mediums (12; 160), wobei die Basis (10) einen Flächenumriß besitzt, der weniger als die Hälfte der Fläche des Mediums (12; 160) belegt, so daß das Medium (12; 160) aus der Basis (10) hervorsteht, wenn es installiert ist.

6. Antriebs- und Wandlungssystem nach einem der vorangehenden Ansprüche, bei dem das Medium eine Diskettenvorrichtung (12) umfaßt und die Antriebseinrichtung (30) gegenüberliegend angeordnete Elemente (42, 56) für den Eingriff mit einem Zentralbereich der Diskettenvorrichtung (12) umfaßt, um das Medium darin zu drehen.

7. Antriebs- und Wandlungssystem nach Anspruch 6, bei dem die Wandlereinrichtung eine magnetische Wandlereinrichtung (106, 114) umfaßt und ferner eine Einrichtung (72, 80) zum Verschieben der magnetischen Wandlereinrichtung (106, 114) zu unterschiedlichen radialen Spuren bezüglich des Mediums (12) umfaßt, wenn die Wandlereinrichtung entfaltet wird.

8. Antriebs- und Wandlungssystem nach einem der Ansprüche 1 bis 5, bei dem das Medium eine Compact-Disk (160) umfaßt und eine Einrichtung vorgesehen ist, um eine Compact-Disk (160) von gegenüberliegenden Seiten ihres Zentralbereichs zu greifen, und wobei die Wandlereinrichtung eine Strahlerfassungseinrichtung (70') umfaßt, die einen operativen Bereich der Compact-Disk (160) überstreicht.

9. Antriebs- und Wandlungssystem nach einem der Ansprüche 1 bis 5, bei dem das Medium eine Bernoulli-Disk umfaßt.

10. Antriebs- und Wandlungssystem nach einem der Ansprüche 1 bis 5, bei dem das Medium eine Diskette (12) umfaßt, die enthält:
ein Gehäuse (10) mit einer Länge, die größer ist als die Diskette (12), mit der sie arbeiten soll, und einer Höhe, die kleiner ist als ein Drittel der Querabmessung der Diskette (12), wobei das Gehäuse (10) eine Einrichtung enthält, die einen Längsschlitz (26) zum Aufnehmen einer eingesetzten Diskette (12) definiert;
einen entfaltbaren Diskettenantriebsmechanismus (30), der zwei Arme (32, 51) umfaßt, die neben und innerhalb eines Endes des Gehäuses (10) beabstandet voneinander angelenkt sind, sowie einen Steuerarm (62), der mit der Basis und dem freien Ende des zweiten Arms (51) verbunden ist, wobei das Ende des Steuerarms (62) längs des Gehäuses (10) hin und her bewegt werden kann, um die ersten und zweiten Arme in eine platzsparende Position im wesentlichen innerhalb des Gehäuses (10) zusammenzuklappen, wobei der Diskettenantriebsmechanismus (30) ferner umfaßt:
eine Aufspanneinrichtung (42), die mit einem ersten Arm (32) verbunden ist, um am freien Ende des ersten Arms (32) zu schwenken und den Zentralbereich der Diskette (12) zu greifen;
eine Diskettenunterstützungseinrichtung (56), die mit einem zweiten der Arme (51) verbunden ist, wobei die Arme (32, 51) so angeordnet sind, daß sie zwischen diesen eine Diskette (12) aufnehmen, die in den Schlitz (26) eingesetzt ist;
eine Torsionsfedereinrichtung (58), die mit dem entfaltbaren Diskettenantriebsmechanismus (30) verbunden ist, um den Diskettenantriebsmechanismus (30) in Richtung zu einer ausgefahrenen Position vorzuspannen;
eine Einrichtung, die mit dem Diskettenantriebsmechanismus (30) verbunden ist, um wenigstens einen Arm senkrecht zu der Ebene einer eingesetzten Diskette (12) in Reaktion auf das Einsetzen der Diskette (12) zu bewegen, um die Diskette (12) für eine Drehung gegen die Aufspanneinrichtung (42) zu drücken;
eine Antriebseinrichtung (36, 38, 40), die mit der Aufspanneinrichtung (42) verbunden ist, um die Diskette (12) zu drehen;
einen entfaltbaren Kopfpositionierungsmechanismus (70), der in dem dem Diskettenantriebsmechanismus (30) gegenüberliegenden Ende des Gehäuses (10) montiert ist, wobei der Kopfpositionierungsmechanismus (70) versehen ist mit einer Zahnschiene (72), die im Gehäuse (10) angelenkt ist und zwischen einer platzsparenden Position innerhalb des Gehäuses (10) und einer ausgefahrenen Position senkrecht hierzu bewegt werden kann; einer Ritzeleinrichtung (80), die mit der Zahnschiene (72) in Eingriff ist und entlang derselben bewegt werden kann; und einer Motoreinrichtung, die mit der Ritzeleinrichtung (80) verbunden ist, um die Position der Ritzeleinrichtung (80) zu steuern;
eine magnetische Kopfbaueinheitseinrichtung (100), die mit dem Ritzel (80) verbunden ist und bewegt werden kann, wobei die Kopfbaueinheitseinrichtung (100) versehen ist mit zwei Armen (104, 108), die an gegenüberliegenden Seiten der Diskette (12) angeordnet sind und die magnetische Wandlereinrichtung (106, 114) enthalten, die an den Enden der Arme (104, 108) montiert ist, sowie einer Einrichtung (116), die auf die Bewegung des Steuerarms (62) anspricht, um die Lade- und Entladeposition der einen magnetischen Wandlereinrichtung (114) der magnetischen Wandlereinrichtungen (106, 114) zu steuern;
eine Grenzpositionsteuereinrichtung (122, 124, 126), die innerhalb des Gehäuses (10) angeordnet ist und das Basisende des Steuerarms (62) ergreift, um dessen Grenzpositionen zu steuern, wobei die Grenzsteuereinrichtung eine Einrichtung (124) zwischen den Grenzpositionen enthält, die einen Feststellmechanismus für die Arme (32, 51, 62) des Diskettenantriebsmechanismus (30) zur Verfügung stellt;
eine Entfaltungssteuereinrichtung (132), die im Gehäuse (10) im Pfad einer eingesetzten Diskette (12) angeordnet ist und einen Federmechanismus (134, 137) enthält, der beim Einsetzen der Diskette (12) zusammengedrückt wird, sowie eine Riegeleinrichtung (140) zum Halten des Federmechanismus (134, 137) in der zusammengedrückten Position, wobei der Federmechanismus (134, 137) gekoppelt wird, um den Diskettenantriebsmechanismus (30) zu entlasten, die Diskette (12) zu greifen und den entfaltbaren Kopfpositionierungsmechanismus (70) zu entlasten, und um die Ladeeinrichtung zu entlasten; und
eine Einrichtung zum Zusammenklappen des Diskettenantriebsmechanismus (30) und des Kopfpositionierungsmechanismus (70) in die platzsparende Position, wobei die Einrichtung in Eingriff gebracht werden kann, um die Riegeleinrichtung (140) zu entriegeln.

11. System nach Anspruch 10, bei dem
die Antriebseinrichtung (36, 38, 40), die mit der Aufspanneinrichtung (42) verbunden ist, eine Antriebsmotoreinrichtung (36), die in der Basis des ersten Arms (32) montiert ist, eine Riemenscheibeneinrichtung (38), die mit der Aufspanneinrichtung (42) verbunden ist, und eine Riemeneinrichtung (40) zum Drehen der Riemenscheibeneinrichtung (38) mittels der Motoreinrichtung (36) enthält; und
der entfaltbare Diskettenantriebsmechanismus (30) eine Torsionseinrichtung (54) enthält, die mit dem zweiten Arm (51) und dem Steuerarm (62) verbunden ist, um den zweiten Arm (51) und den Steuerarm (62) in Richtung zur entfalteten Position vorzuspannen.

12. Verfahren zur Verwendung eines drehbaren Datenspeichermediums (12; 160), das eine Antriebsvorrichtung (30) und einen Wandlermechanismus (100) verwendet, die normalerweise innerhalb eines Gehäusevolumens (10) positioniert sind, wobei das Verfahren die Schritte umfaßt:
Aufnehmen des Mediums (12; 160) in einer vorstehenden Position bezüglich des Gehäusevolumens (10);
Drehen des Mediums (12; 160), während es sich in der vorstehenden Position befindet; und
Steuern der Betriebsposition des Wandlermechanismus (100) relativ zum Medium (12; 160), um eine Datenübertragung mit dem in der vorstehenden Position befindlichen Medium (12; 160) zu bewerkstelligen;
gekennzeichnet durch das Entfalten der Antriebsvorrichtung (30) außerhalb des Gehäusevolumens (10) zum Greifen eines Steuerbereichs des Mediums (12; 160); und das Entfalten des Wandlermechanismus (100) in operativer Beziehung zum Medium (12; 160) in der vorstehenden Position vor dem Bewerkstelligen der Datenübertragung.

## Revendications

1. Système de lecture et de transduction pour support disque amovible, comprenant une embase (10) qui comporte une enveloppe externe plus petite que la surface d'enveloppe du support (12 ; 60) qui doit être utilisé et dans laquelle il est fourni des moyens de lecture (30) pouvant s'engager avec des moyens (36) destinés à faire tourner le support disque (12 ; 160) et des moyens de transducteur (100) pouvant s'engager avec des moyens (72, 80) destinés à commander la position des moyens de transducteur par rapport au support disque (12 ; 160) en cours de fonctionnement ;
caractérisé en ce que
les moyens de lecture (30) sont mobiles entre une position repliée à l'intérieur de l'embase (10) et une position déployée au moins en partie hors de l'embase (10) en engagement avec un support installé (12 ; 160), et en ce que
les moyens de transducteur (100) sont mobiles entre une position repliée au moins en partie à l'intérieur de l'embase (10) et une position de fonctionnement déployée dans une relation de balayage du support (12; 160).

2. Système de lecture et de transduction selon la revendication 1, dans lequel les moyens de lecture (30) et les moyens de transducteur (100) sont adjacents et situés sur un premier plan commun en position repliée, et reposent au moins en partie de manière transversale par rapport à un second plan commun essentiellement perpendiculaire au premier plan et hors de l'embase (10) lorsqu'ils sont déployés.

3. Système de lecture et de transduction selon les revendications 1 ou 2, dans lequel:
l'embase (10) s'étend sur une longueur prédéterminée et a une épaisseur supérieure à celle du support (12 ; 160) et une profondeur inférieure à celle du support;
les moyens de lecture de support (30) sont montés à proximité d'une extrémité de la longueur de l'embase (10) et peuvent s'étendre à partir de l'intérieur de l'embase (10) sur un plan donné essentiellement perpendiculaire à la longueur de l'embase;
les moyens de transducteur (100) étant montés à proximité de l'autre extrémité de la longueur de l'embase (10) et pouvant s'étendre à partie de l'intérieur de l'embase (10) sur le plan donné; et
des moyens couplés à l'embase destinés à recevoir un support rotatif (12 ; 160) en position de fonctionnement sur le plan donné, le support (12 ; 160) en position de fonctionnement étant en saillie à partir de l'embase (10) au-delà des moyens de lecture (30) et des moyens de transducteur (100) en extension et étant en engagement avec ceux-ci lorsqu'ils sont dans une relation de fonctionnement.

4. Système de lecture et de transduction selon l'une des revendications précédentes, dans lequel lesdits moyens de lecture (30) comprennent des moyens de terminal destinés à s'engager avec une zone centrale du support (12 ; 160) afin de faire tourner celui-ci.

5. Système de lecture et de transduction selon l'une des revendications précédentes, dans lequel l'embase (10) comprend des moyens destinés à recevoir une partie du support (12 ; 160), et dans lequel l'embase (10) a un profil de surface qui occupe moins de la moitié de la surface du support (12 ; 160), de sorte que le support (12 ; 160), une fois installé, est en saillie à partir de l'embase (10).

6. Système de lecture et de transduction selon l'une des revendications précédentes, dans lequel le support se compose d'un dispositif à disque souple (12) et dans lequel les moyens de lecture (30) se composent d'éléments disposés en opposition (42, 56) afin de s'engager avec une zone centrale du dispositif à disque souple (12) et de faire tourner le support dans ceux-ci.

7. Système de lecture et de transduction selon la revendication 6, dans lequel les moyens de transducteur se composent de moyens de transducteur magnétique (106, 114) et les moyens de transducteur comprennent en outre des moyens (72, 80) destinés à faire passer les moyens de transducteur magnétique (106, 114) sur différentes pistes radiales par rapport au support (12) lorsque les moyens de transducteur sont déployés.

8. Système de lecture et de transduction selon l'une des revendications 1 à 5, dans lequel le support se compose d'un disque compact (160) et des moyens sont fournis pour engager un disque compact (160) à partir de côtés opposés de la zone centrale de celui-ci, et dans lequel les moyens de transducteur comprennent des moyens de détection par faisceau (70') qui traversent une zone de fonctionnement du disque compact (160).

9. Système de lecture et de transduction selon l'une des revendications 1 à 5, dans lequel le support se compose d'un disque de Bernoulli.

10. Système de lecture et de transduction selon l'une des revendications 1 à 5, dans lequel le support se compose d'un disque souple (12), comprenant:
un boîtier (10) ayant une longueur plus grande que celle du disque souple (12) avec lequel il doit fonctionner et une hauteur qui est inférieure à un tiers de la dimension transversale du disque souple (12), le boîtier (10) comprenant des moyens qui définissent une fente longitudinale (26) destinée à recevoir un disque souple (12) par introduction;
un mécanisme de lecture de disque pouvant se déployer (30) comprenant une paire de bras (32, 51) montés en pivotement à proximité et à l'intérieur d'une extrémité du boîtier (10) et séparés l'un de l'autre, un bras de commande (62) couplé à l'embase et à l'extrémité libre du second bras (51), l'extrémité du bras de commande (62) ayant un déplacement alternatif le long du boîtier (10) pour replier les premier et second bras dans une position repliée essentiellement à l'intérieur du boîtier (10), le mécanisme de lecture de disque (30) comprenant en outre:
des moyens de mandrin (42) couplés à un premier (32) des deux bras pour pivoter à l'extrémité libre du premier bras (32), afin de s'engager avec la zone centrale du disque souple (12);
des moyens de support de disque (56) couplés à un second (51) des deux bras, les bras (32, 51) étant positionnés de manière à recevoir entre eux un disque souple (12) qui est introduit dans la fente (26);
des moyens de ressort de torsion (58) couplés au mécanisme de lecture de disque pouvant se déployer (30) destinés à décaler le mécanisme de lecture de disque (30) vers une position en extension;
des moyens couplés au mécanisme de lecture de disque (30) destinés à déplacer au moins un bras de manière perpendiculaire au plan d'un disque souple introduit (12) en réponse à l'introduction du disque souple (12), afin de pousser le disque souple (12) contre les moyens de mandrin (42) et de le faire tourner;
des moyens d'entraînement (36, 38, 40) couplés aux moyens de mandrin (42) destinés à faire tourner le disque souple (12);
un mécanisme de positionnement de tête pouvant se déployer (70) monté à l'extrémité du boîtier (10) opposée au mécanisme de lecture de disque (30), le mécanisme de positionnement de tête (70) comprenant une crémaillère (72) montée en pivotement dans le boîtier (10) et mobile entre une position repliée à l'intérieur du boîtier (10) et une position en extension perpendiculaire à celui-ci ; des moyens de pignon (80) en engagement avec la crémaillère (72) et mobiles le long de celle-ci ; et des moyens de moteur couplés aux moyens de pignon (80) destinés à commander la position des moyens de pignon (80);
des moyens d'ensemble de tête magnétique (100) couplés au pignon (80) et mobiles avec celui-ci, les moyens d'ensemble de tête (100) comprenant une paire de bras (104, 108) disposés sur les côtés opposés du disque souple (12) et comprenant des moyens de transducteurs magnétiques (106, 114) montés sur les extrémités des bras (104, 108), et des moyens (116) destinés à répondre au déplacement du bras de commande (62) afin de commander la position de chargement et de déchargement de l'un (114) des moyens de transducteurs magnétiques (106, 114);
des moyens de commande de position limite (122, 124, 126) disposés à l'intérieur du boîtier (10) s'engageant avec l'extrémité d'embase du bras de commande (62) afin de commander les positions limites de celui-ci, les moyens de commande de limite comprenant des moyens (124) situés entre les positions limites fournissant un mécanisme de détente pour les bras (32, 51, 62) du mécanisme de lecture de disque (30);
des moyens de commande de déploiement (132) disposés dans le boîtier (10) sur le passage d'un disque souple introduit (12) et comprenant un mécanisme à ressort (134, 137) qui se comprime lors de l'introduction dudit disque (12) et des moyens de verrouillage (140) destinés à retenir le mécanisme à ressort (134, 137) en position comprimée, le mécanisme à ressort (134, 137) étant couplé pour libérer le mécanisme de lecture de disque (30), pour engager le disque souple (12) et pour libérer le mécanisme de positionnement de tête pouvant se déployer (70), et pour libérer les moyens de chargement; et
des moyens destinés à replier le mécanisme de lecture de disque (30) et le mécanisme de positionnement de tête (70) en position repliée, et pouvant s'engager pour déverrouiller les moyens de verrouillage (140).

11. Système selon la revendication 10, dans lequel
les moyens d'entraînement (36, 38, 40) couplés aux moyens de mandrin (42) comprennent des moyens de moteur d'entraînement (36) montés dans l'embase du premier bras (32), des moyens de poulie (38) couplés aux moyens de mandrin (42), et des moyens de courroie (40) destinés à faire tourner les moyens de poulie (38) à partir des moyens de moteur (36); et
dans lequel le mécanisme de lecture de disque pouvant se déployer (30) comprennent des moyens de torsion (54) couplés au second bras (51) et au bras de commande (62) afin de décaler le second bras (51) et le bras de commande (62) vers la position déployée.

12. Procédé d'utilisation d'un support de stockage de données rotatif (12 ; 160) utilisant un dispositif de lecture (30) et un mécanisme à transducteur (100) positionnés normalement à l'intérieur du volume d'un boîtier (10) comprenant les étapes de:
réception du support (12 ; 160) dans une position en saillie par rapport au volume du boîtier (10);
mise en rotation du support (12 ; 160) lorsque celui-ci est dans la position en saillie; et
commande de la position de fonctionnement du mécanisme à transducteur (100) par rapport au support (12 ; 160) afin d'effectuer un transfert de données, le support (12 ; 160) étant dans la position en saillie;
caractérisé par le déploiement du dispositif de lecture (30) à l'extérieur du volume du boîtier (10) afin de saisir une zone de commande du support (12 ; 160) ; et le déploiement du mécanisme à transducteur (100) dans une relation de fonctionnement par rapport au support (12 ; 160) dans la position en saillie, avant d'effectuer ledit transfert de données.
